# EUROPÄISCHE PATENTSCHRIFT

(11) **EP 1 167 099 B1**
(45) Veröffentlichungstag und Bekanntmachung des Hinweises auf die Patenterteilung: **14.11.2007**
(21) Anmeldenummer: 01115492.9
(22) Anmeldetag: 27.06.2001
(51) Int. Cl.: B60J 7/047

(54) **Öffnungsfähiges Fahrzeugdach**
Openable roof for vehicle
Toit ouvrant pour véhicule

(30) Priorität: 27.06.2000 FR 0008212
(43) Veröffentlichungstag der Anmeldung: 02.01.2002
(73) Patentinhaber: Webasto Vehicle Systems International GmbH, 82131 Stockdorf (DE)
(72) Erfinder: Guicheteau, Jean-Luc, 49300 Cholet (FR)
(74) Vertreter: Wiese, Gerhard

(56) Entgegenhaltungen:
- EP-A- 0 101 322
- EP-A- 0 989 009
- DE-U- 9 211 365
- GB-A- 530 784
- US-A- 5 360 254
- US-A- 5 944 378

## Beschreibung

Die Erfindung betrifft ein öffnungsfähiges Fahrzeugdach und insbesondere ein aus einer Mehrzahl von steifen untereinander faltbaren Elementen, die in einem Stauraum oder im Kofferraum abgelegt werden können, bestehendes Dach.

Es sind bereits einige Beispiele derartiger Fahrzeugdächer bekannt. Aus der US-A-5,944,378 ist ein Fahrzeugdach mit mehreren Dachelementen bekannt, deren seitliche Führungselemente in mehreren separaten, gestaffelt übereinander angeordneten Führungen geführt sind, so dass die Dachelemente durch eine Längsverschiebung in eine übereinanderliegende Öffnungsposition gebracht werden können.

Es wurde weiterhin insbesondere eine Vorrichtung vorgeschlagen, welche einen Rahmen aufweist, der am oberen Teil der Karosserie befestigt ist und vorne und hinten seitliche und in Querrichtung verlaufende Kanten aufweist, wobei der genannte Rahmen durch Zwischenquerträger versteift wird, die an den seitlichen Rändern des Rahmens parallel zu den Querkanten befestigt sind, womit entsprechend drei Räume abgegrenzt werden. Eine zentrale Platte ist an den Zwischenquerträgern und an den seitlichen Kanten befestigt, während die Räume vorne und hinten am Rahmen durch bewegliche Platten geschlossen werden, die sich jeweils hin zur mittleren Platte bewegen können, um den von ihnen in der Schließstellung abgeschlossenen Raum zumindest teilweise freizugeben, nachdem manuell betätigte verriegelbare Translationsvorrichtungen entsprechend bedient wurden.

Es wurde auch eine Vorrichtung für das Dach von Mehrzweckfahrzeugen vorgeschlagen, die mehrere Elemente aufweist, die nach Translation der verschiedenen Elemente durch Drehen in eine Ablage befördert werden können, die hinten am Fahrzeug parallel zu den Sitzen angeordnet ist.

Die erste vorgeschlagene Lösung ist durch ihre Primitivität und die Unmöglichkeit gekennzeichnet, das Dach vollständig zu öffnen, da der Zwischenteil fest angeordnet ist.

Die zweite vorgeschlagene Lösung ist durch die Komplexität der eingesetzten mechanischen Mittel gekennzeichnet, wobei Kombinationen von Zylindern, Hebeln und Pleuelstangen verwendet werden, die gelenkige Vierecke bilden, wobei sich diese Einheiten im Laufe der Zeit bei häufiger Nutzung und aufgrund der Fahrzeugvibrationen lockern können.

Die Erfindung hat also die Aufgabe, die verschiedenen oben beschriebenen Nachteile zu beseitigen und ein öffnungsfähiges Fahrzeugdach vorzuschlagen, das einfach und zuverlässig ist und ein bewegliches vorderes Dachelement und mindestens ein hinteres bewegliches Dachelement aufweist.

Diese Aufgabe wird durch die Merkmale der unabhängigen Patentansprüche gelöst. Vorteilhafte Ausgestaltungen sind den jeweiligen Unteransprüchen zu entnehmen.

Ein erfindungsgemäßes Fahrzeugdach zeichnet sich dadurch aus, dass jedes Dachelement beidseitig mit einer entsprechenden seitlichen Führung des genannten Dachelements versehen ist, wobei jede seitliche Führung jedes vorderen Dachelements mit einer Längsrampe versehen ist, in der sich ein hervorstehendes Element bewegt, das am vorderen Ende der entsprechenden seitlichen Führung des hinten anschließenden Dachelements befestigt ist, und dadurch, daß der hintere Abschnitt jeder Längsrampe ein Abschnitt ist, der sich in der Weise schräg nach oben und nach vorne erstreckt, dass bei der Bewegung des genannten vorderen Dachelements nach hinten das vorspringende Element des anschließenden Dachelements, das in den genannten hinteren Abschnitt der genannten Rampe eingreift, nach oben angehoben wird, um es dem genannten vorderen Dachelement zu ermöglichen, unter dem so angehobenen genannten anschließenden Dachelement zu liegen zu kommen.

Nach einer bevorzugten Ausführungsform der Erfindung werden die seitlichen Führungen des hinteren Dachelements in drehbarer Weise auf einem entsprechenden seitlichen Schlitten mittels einer hebelförmigen Stange montiert, deren hinteres Ende an einem hinteren Anlenkpunkt angelenkt ist, der am hinteren Ende des Schlittens liegt, und deren vorderes Ende an einem vorderen Anlenkungspunkt angelenkt ist, der am vorderen Ende der genannten seitlichen Führung liegt. Jede hebelförmige Stange weist an ihrem mittleren Teil ein hervorstehendes Teil auf, welches geeignet ist, in eine kreisförmige Nut des entsprechenden Schlittens einzugreifen, wenn die Stange sich bezüglich des genannten Schlittens dreht, sowie einen sich nach oben und nach hinten erstreckenden Arm, dessen hinteres Ende an einem Gelenkpunkt am hinteren Ende der entsprechenden seitlichen Führung angelenkt ist.

Nach einer bevorzugten Ausführungsform der Erfindung weist der Schlitten an seinem vorderen Ende einen vorderen Führungsfinger auf, der in eine vordere Führungsschiene eingreift, und an seinem hinteren Ende einen hinteren Führungsfinger, der in eine hintere Führungsschiene eingreift, wobei die vorderen und hinteren Schienen jeweils fahrzeugkarosseriefest sind und sich ausgehend von dem oberen Ende in einer vertikalen Ebene erstrecken, die der Stellung des entsprechenden Fingers des Schlittens in seiner oberen Stellung entspricht, in der das Dach in seiner Schließstellung befindlich ist, bis zu seinem unteren, im wesentlichen auf der Höhe des Bodens des Kofferraums des Fahrzeuges liegenden Ende, was der Stellung des entsprechenden Fingers des Schlittens entspricht, wenn der genannte Schlitten in seiner unteren Stellung im wesentlichen auf dem genannten Boden zu liegen kommt und dabei die verschiedenen Dachelemente trägt.

Weitere erfindungswesentliche Merkmale und Vorteile der Erfindung gehen aus der nachstehenden Beschreibung hervor, in der mit Bezug auf die Zeichnungen Ausführungsbeispiele erläutert werden. Es zeigt:
- Fig. 1: eine schematische Aufrissdarstellung eines mit einem Dach nach einer Ausführungsform der vorliegenden Erfindung ausgestatteten Fahrzeuges, wobei das Dach in der Schließstellung dargestellt wird;
- Fig. 2: eine analoge Ansicht zur Fig. 1, wobei die Dachelemente in vollständiger Offenstellung dargestellt werden;
- Fig. 3: eine zur Fig. 1 analoge Ansicht, wobei die Dachelemente in ihrer abgelegten Position dargestellt werden, wie sie am Boden des Kofferraums des Fahrzeuges abgelegt werden;
- Fig. 4: eine vergrößerte Explosionszeichnung, welche die Gesamtheit einer seitlichen Hälfte der Antriebsvorrichtung der Elemente des Daches des Fahrzeugoberteils zeigt;
- Fig. 5: eine schematische Ansicht mit der Darstellung des Endes der ersten Phase der Steuerung der Bewegung der beweglichen Dachelemente;
- Fig. 6: eine schematische Darstellung, welche die aufeinander folgenden Bewegungsphasen der beweglichen Dachelemente im Laufe der Bewegung in den vorderen und hinteren Schienen bis zu ihrem Ablegen auf der Höhe des Fahrzeugbodens zeigt.

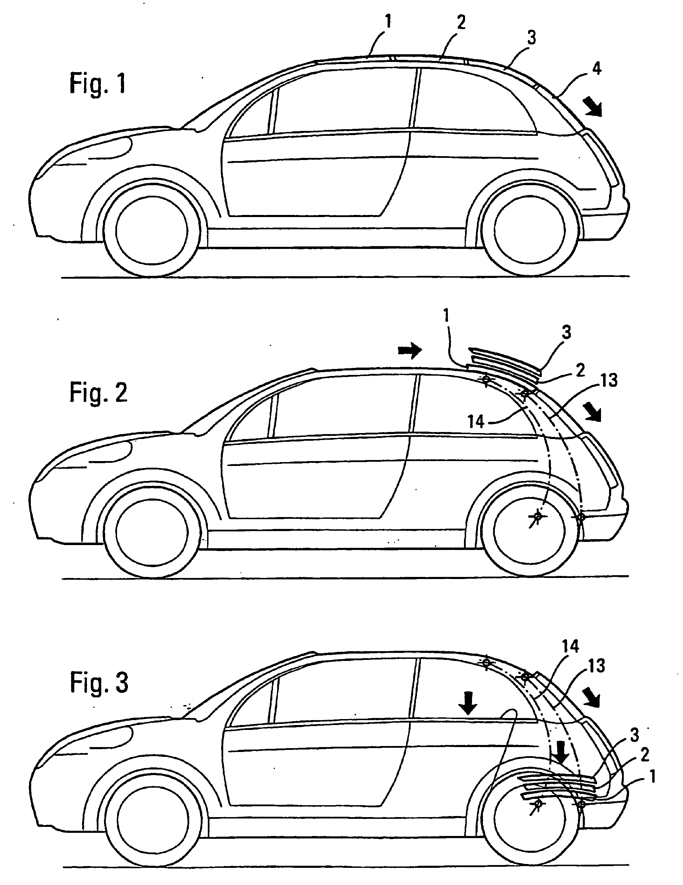

Das in den Figuren 1 bis 3 dargestellte öffnungsfähige Fahrzeugdach besteht aus drei beweglichen festen Dachelementen oder Deckeln 1, 2 und 3, die in der Schließstellung bündig hintereinander angeordnet sind. Das Dach setzt sich nach hinten durch eine bewegliche Scheibe 4 der hinteren Tür fort. Die drei beweglichen Dachelemente 1, 2 bzw. 3 sind beispielsweise aus Glas oder einem transparenten Kunststoff hergestellt und mit Verstärkungen versehen.

Jedes Dachelement 1, 2 bzw. 3 ist mit zwei seitlichen Führungen versehen, die in Längsrichtung in der Nähe der seitlichen Ränder der Dachelemente angeordnet sind. Entsprechend sind die Dachelemente 1, 2 und 3 jeweils mit einem Paar seitlicher Führungen, wie z.B. 5, 6 und 7, mittels abnehmbarer, nicht dargestellter Verbindungen versehen.

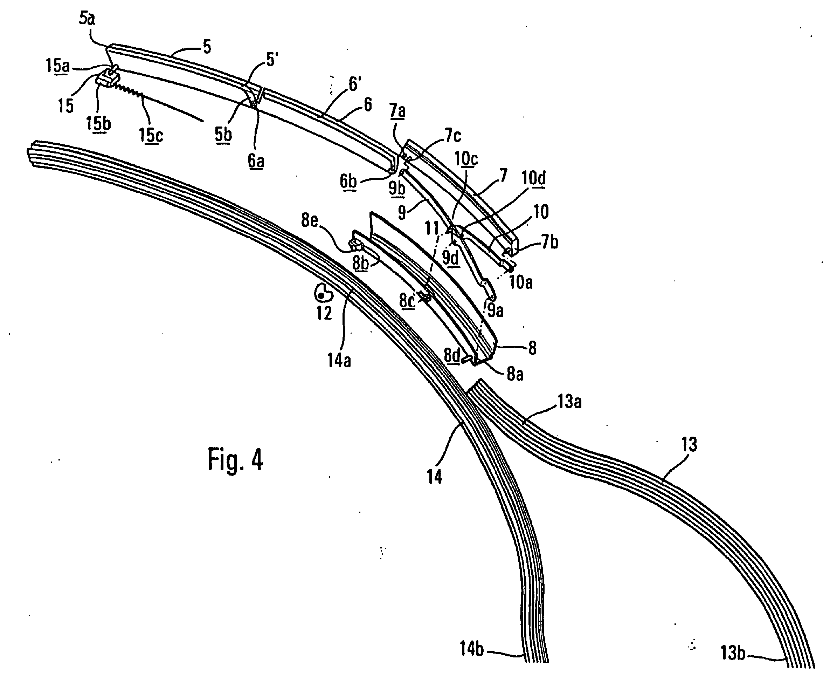

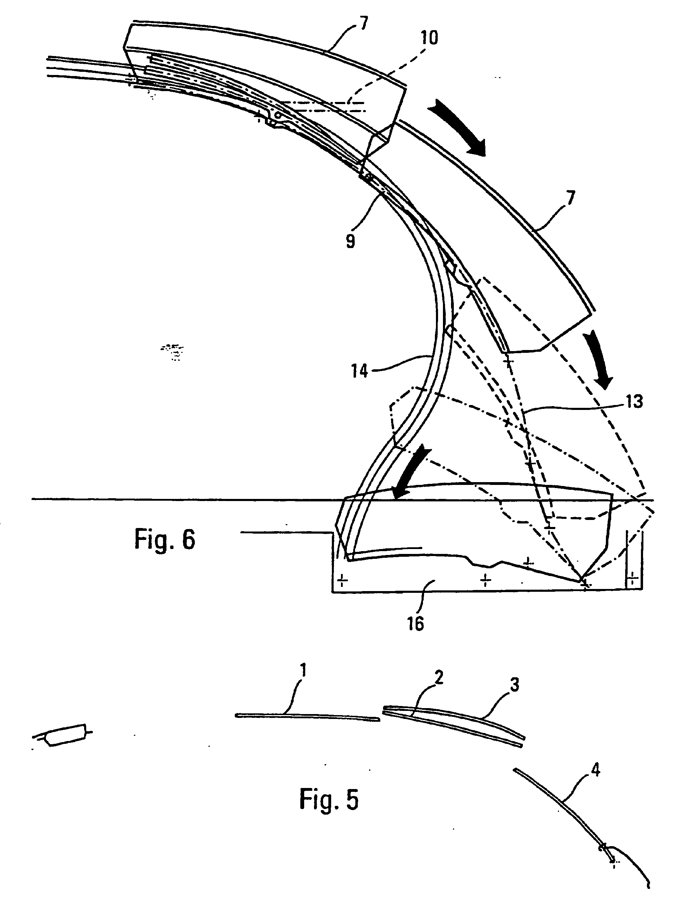

Nachstehend werden insbesondere unter Bezugnahme auf die Figuren 4 und 6 die einzelnen Elemente der Erfindung beschrieben. Diese Elemente sind jeweils nur für eine Seite des Fahrzeuges dargestellt, sind jedoch auf beiden Seiten des Fahrzeugs in spiegelbildlicher Anordnung vorhanden. Die Vorderseite des Fahrzeuges ist in allen Figuren links angeordnet.

Die seitlichen Führungen 5 und 6 sind jeweils mit Rampen 5' und 6' versehen, in denen sich jeweils Finger 6a und 7a bewegen, die nach oben überstehen und am jeweiligen vorderen Ende der Führungen 6 und 7 angeordnet sind.

Der hintere Teil der Rampe 5' bzw. 6' weist einen schrägen Abschnitt 5b bzw. 6b auf, der nach oben und nach vorne gerichtet ist, in den bei der Montage des Daches ein vorspringendes Element beispielsweise in Form eines Fingers 6a bzw. 7a eingesetzt wird, der überstehend am vorderen Ende der entsprechenden seitlichen Führung 6 bzw. 7 des Deckels 2 bzw. 3 angeordnet ist.

Jede seitliche Führung 7 ist auf einem entsprechenden seitlichen Schlitten 8 über eine längliche Stange 9 montiert, deren hinteres Ende 9a an einem hinteren Gelenkpunkt 8a angelenkt ist, der sich am hinteren Ende des Schlittens 8 befindet, und deren vorderes Ende 9b an einem am vorderen Ende der seitlichen Führung 7 gelegenen vorderen Anlenkungspunkt 7c angelenkt ist.

Eine Stange 10 ist an ihrem hinteren Ende 10a bezüglich des hinteren Endes 7b der entsprechenden seitlichen Führung 7 und in der Nähe ihres vorderen Endes 10c nach einer Gelenkachse 10d, die bei 9d einen mittleren Teil der Stange 9 durchquert, drehbar montiert. In der Schließstellung des Daches erstreckt sich die Stange 10 ausgehend von ihrer Gelenkachse 10d nach hinten und nach oben.

Ein vom vorderen Ende 10c der Stange 10 vor der Achse 10d getragenes vorspringendes Element in Form eines Fingers 11 wird von einer Öffnung 8c erfasst, die am Schlitten 8 angebracht ist und die so ausgebildet ist, dass sich die Stange 10 in entgegengesetztem Uhrzeigersinn zu demjenigen dreht, in dem sich die Stange 9 bezüglich des Schlittens 8 dreht.

Wenn also das vordere Ende der seitlichen Führung 7 vom Finger 7a angehoben wird und das vordere Ende 9b der Stange 9 anhebt, die in Fig. 4 in Uhrzeigerrichtung dreht, lässt der Finger 11 die Stange 10 in entgegengesetztem Uhrzeigersinn drehen, um auch das hintere Ende 7b der genannten Führung 7 anzuheben.

Das vordere Ende des Schlittens 8 trägt seitlich nach außen überstehend einen Sperrfinger 8b, der die Verriegelung des Schlittens 8 an einem Punkt 12 der Karosserie in der in Fig. 4 dargestellten Schließstellung des Daches bewirkt. Das hintere Ende des Schlittens 8 weist seitlich nach außen überstehend einen Finger 8d auf, der in der Ruhestellung des Schlittens 8 in den vorderen Eingang 13a einer Schiene 13 eingesetzt ist, welche im folgenden als "hintere Schiene" bezeichnet wird. Das vordere Ende des Schlittens 8 weist außerdem seitlich nach außen überstehend einen Finger 8e auf, der in der Ruhestellung des Schlittens 8 in den vorderen Eingang 14a einer Schiene 14 eingesetzt ist, welche im folgenden als "vordere Schiene" bezeichnet wird.

Jede vordere Schiene 14 und jede hintere Schiene 13 ist jeweils fahrzeugkarosseriefest und erstreckt sich in einer vertikalen Ebene ausgehend von dem oberen Ende 14a, 13a, das der Stellung des entsprechenden Fingers des Schlittens 8 in der oberen Stellung entspricht, in der das Dach in seiner Schließstellung ist, bis zu seinem unteren Ende 14b, 13b im wesentlichen auf der Höhe des Bodens 16 des Kofferraums des Fahrzeuges, was der Stellung des entsprechenden Fingers des Schlittens 8 entspricht, wenn der genannte Schlitten 8 in seiner unteren Stellung im wesentlichen auf dem genannten Boden 16 aufliegt und die verschiedenen Dachelemente 1, 2 und 3 trägt.

Eine Antriebsvorrichtung 15, die mit der seitlichen Führung 5 in der Nähe ihres vorderen Endes 5a durch eine Achse 15a verbunden ist, weist ein Verriegelungsorgan 15b auf, dessen Verwendungszweck im Laufe der Beschreibung des Vorgangs der Dachöffnung beschrieben wird. Die genannte Vorrichtung 15 wird durch ein Betätigungsorgan 15c einer im Übrigen nicht dargestellten elektromechanischen Einheit gesteuert, welches in an sich bekannter Weise von einem Spiralkabel oder Zahnriemen gebildet wird.

Das Antriebsprinzip der beweglichen Dachelemente 1, 2 und 3 ausgehend von der Schließstellung des Dachs und ihrer Ablage ist folgendes:

Unter der Steuerung der Antriebsvorrichtung 15, welche mit der seitlichen Führung 5 des vorderen Deckels 1 verbunden ist, wird die Gesamtheit der Führung 5 und 6 nach hinten gezogen. Die Translationsbewegung der Führung 6 nach hinten sichert das Gleiten des vorderen Fingers 7a der Führung 7 in der Rampe 6' und sichert gleichzeitig das Gleiten des vorderen Endes der Führung 7 nach oben. Gleichzeitig und wie bereits beschrieben bewirkt die entsprechende Drehung der Stange 9 das Drehen der Stange 10 in der Gegenrichtung, was das hintere Ende 7b der Führung 7 anhebt.

Analog bewirkt die Translationsbewegung der Führung 5, welche mit der Rampe 5' versehen ist, in der sich der Finger 6a der Führung 6 bewegt, welcher dem schrägen Abschnitt 5b, der nach oben und nach vorne gerichtet ist, der Rampe 5' folgt, das Gleiten der Oberseite der Führung 6 nach oben.

Zunächst (Fig. 5) kommt also der Deckel 2 unter dem Deckel 3 zu liegen, dann kommt der Deckel 1 unter dem Deckel 2 zu liegen.

Es wurde gezeigt, dass die Translationsbewegung der Führung 5 den vorderen Finger 6a der Führung 6 in seiner Rampe 5' antreibt und dass die Führungen 5, 6 und 7 übereinander befindlich sind, wenn die Führung 6 vorne in der Rampe 5' von 5 zum Anschlag kommt. Zu diesem Zeitpunkt kommt es zur Verriegelung der bei 15a mit dem vorderen Ende 5a der Führung 5 verbundenen Antriebsvorrichtung 15 durch ihr Verriegelungsorgan 15b am vorderen Ende des Schlittens 8, während gleichzeitig der Schlitten 8 entriegelt wird, indem der Sperrfinger 8b freigegeben wird, welcher in der Ruhestellung an einem Punkt 12 der Karosserie des Fahrzeuges positioniert ist.

Der so freigegebene Schlitten 8 wird in Translationsbewegung solange nach hinten und nach unten bewegt, bis die Ablagestellung auf der Höhe des Fahrzeugbodens erreicht wird. In dieser letzten Bewegungsphase bewegt sich der am vorderen Ende des Schlittens 8 befindliche Finger 8e in der Spur der vorderen Schiene 14, während der am hinteren Ende des Schlittens 8 gelegene Finger 8d sich in der Spur der hinteren Schiene 13 bewegt.

Die Gesamtheit der drei Deckel 1, 2, 3 und ihr Führungssystem längs der Schienen 13 und 14 wird in Fig. 3 dargestellt.

Die Fig. 6 zeigt aufeinander folgende Phasen der Translationsbewegung der Gesamtheit der Führungselemente 5, 6 und 7, welche untereinander angeordnet und durch den Schlitten 8 angetrieben werden, der dem Verlauf der vorderen und hinteren Führungsschienen 13 und 14 nach hinten und nach unten folgt, bis sie auf dem Boden 16 des Fahrzeugs zu liegen kommen.

Es versteht sich, dass die Erfindung durch die oben beschriebene und dargestellte Ausführungsform nicht eingeschränkt wird. Diese Beschreibung hat nur Beispielcharakter und keinen einschränkenden Charakter. Es können zahlreiche Detailveränderungen bei der Ausführung vorgenommen werden, ohne damit den Rahmen der Erfindung zu verlassen. So können die vorspringenden Finger durch Bolzen, Gleitschuhe, Rollen oder dergleichen ersetzt werden. Ebenso ist eine kinematische Umkehr denkbar, bei der die vorspringenden Elemente und die sie aufnehmenden Führungen an den Deckelteilen vertauscht sind. Die Führungsbahnen können auch als vorspringende Rippen ausgebildet sein, die von entsprechenden Gleitern, Bolzen oder Rollen unter-, über- oder umgriffen werden.

Insgesamt können die vorstehend beschriebenen Mittel durch äquivalente Mittel beliebiger Art mit anderer Form ersetzt werden, die jedoch geeignet sind, die gleiche Funktion zu erfüllen, um zum gleichen Ergebnis zu kommen.

## Patentansprüche

1. Öffnungsfähiges Fahrzeugdach, welches ein bewegliches hinteres Dachelement (3) und mindestens ein bewegliches vorderes Dachelement (1, 2) aufweist, wobei jedes Dachelement (1, 2, 3) beidseitig mit einer dem Dachelement (1, 2, 3) zugeordneten längs in der Nähe der Seitenkanten angeordneten seitlichen Führung (5, 6, 7) versehen ist, **dadurch gekennzeichnet, dass** jede seitliche Führung (5, 6) jedes vorderen Dachelements (1, 2) mit einer Längsrampe (5', 6') versehen ist, in der sich ein hervorstehendes Element (6a, 7a) bewegt, das am vorderen Ende der entsprechenden seitlichen Führung (6, 7) des hinten anschließenden Dachelements (2, 3) befestigt ist, so dass die seitlichen Längsrampen (5', 6') und die in diese eingreifenden Elemente (6a, 7a) bewirken, dass bei der Bewegung des genannten vorderen Dachelements (1, 2) nach hinten das anschließende Dachelement (2, 3) nach oben angehoben wird, um es dem genannten vorderen Dachelement (1, 2) zu ermöglichen, unter dem so angehobenen genannten schließenden Dachelemente (2, 3) zu liegen zu kommen.

2. Fahrzeugdach nach Anspruch 1, **dadurch gekennzeichnet, dass** das hervorstehende Element von einem Finger (6a, 7a) gebildet wird und dass der hintere Abschnitt (5b, 6b) jeder Rampe (5', 6') ein Abschnitt ist, der sich in der Weise schräg nach oben und nach vorne erstreckt, dass bei der Bewegung des genannten vorderen Dachelements (1, 2) nach hinten der Finger (6a, 7a) des anschließenden anzuhebenden Dachelements (2, 3) in den genannten hinteren Abschnitt (5b, 6b) der genannten Rampe (5', 6') eingreift.

3. Öffnungsfähiges Fahrzeugdach nach Anspruch 1 oder 2, welches ein bewegliches hinteres Dachelement (3) und mindestens ein bewegliches vorderes Dachelement (1, 2) aufweist, die in der Öffnungsstellung des Daches in einen hinteren Stauraum ablegbar sind, **dadurch gekennzeichnet, dass** die vorderen und hinteren Dachelemente (1, 2, 3) vor dem Absenken in den Stauraum von einem Aufnahmeteil (8) in übereinander liegender Position gesammelt werden.

4. Fahrzeugdach nach Anspruch 3, **dadurch gekennzeichnet, dass** das Aufnahmeteil als Schlitten ausgebildeten (8) zum Absenken längs Führungsschienen (14, 13) verfahrbar ist.

5. Fahrzeugdach nach Anspruch 3 oder 4, **dadurch gekennzeichnet, dass** das hintere Dachteil (3) am Aufnahmeteil (8) mittels wenigstens eines Schwenkhebels (Stangen 9 bzw. 10) gelagert ist.

6. Fahrzeugdach nach Anspruch 5, **dadurch gekennzeichnet, dass** jede seitliche Führung (7) des hinteren Dachelements (3) auf einem entsprechenden seitlichen Schlitten (8) über eine Stange (9) montiert ist, deren hinteres Ende (9a) an einem hinteren Anlenkungspunkt (8a) angelenkt ist, der sich am hinteren Ende des Schlittens (8) befindet und deren vorderes Ende (9b) an einem am vorderen Ende der genannten seitlichen Führung (7) gelegenen vorderen Anlenkungspunkt (7c) angelenkt ist.

7. Fahrzeugdach nach Anspruch 6, **dadurch gekennzeichnet, dass** eine weitere Stange (10) an ihrem hinteren Ende (10a) bezüglich des hinteren Endes (7b) der entsprechenden seitlichen Führung (7) und in der Nähe ihres vorderen Endes (10c) nach einer Gelenkachse (10d), die bei (9d) einen mittleren Teil der Stange (9) durchquert, drehbar montiert ist

8. Fahrzeugdach nach Anspruch 7, **dadurch gekennzeichnet, dass** ein vom vorderen Ende (10c) der Stange (10) vor der Achse (10d) getragener Finger (11) in eine Öffnung (8c) eingesetzt wird, die an dem Schlitten (8) angeordnet und so ausgebildet ist, daß sich die Stange (10) in entgegengesetztem Uhrzeigersinn zu dem dreht, in dem sich die Stange (9) bezüglich des Schlittens (8) dreht.

9. Fahrzeugdach nach einem der Ansprüche 3 bis 8, **dadurch gekennzeichnet, dass** jeder Schlitten (8) an seinem vorderen Ende einen vorderen Führungsfinger (8e), der in einer vorderen Führungsschiene (14) erfasst ist, und an seinem hinteren Ende einen hinteren Führungsfinger (8d), welcher in einer hinteren Führungsschiene (13) erfasst ist, aufweist, wobei jede vordere Schiene (14) und hintere Schiene (13) fahrzeugkarosseriefest ist und sich in einer vertikalen Ebene ausgehend von dem oberen Ende (14a, 13a) erstreckt, das der Stellung des entsprechenden Fingers des Schlittens (8) in der oberen Stellung entspricht, in der das Dach in seiner Schließstellung ist, bis zu seinem unteren Ende (14b, 13b) im wesentlichen auf der Höhe des Bodens (16) des Fahrzeuges, was der Stellung des entsprechenden Fingers des Schlittens (8) entspricht, wenn der genannte Schlitten (8) in seiner unteren Stellung im wesentlichen auf dem Boden (16) aufliegt und die verschiedenen Dachelemente (1, 2, 3) trägt.

10. Fahrzeugdach nach einem der Ansprüche 3 bis 9, **dadurch gekennzeichnet, dass** jeder Schlitten (8) Verriegelungsmittel (8b), um den genannten Schlitten (8) in seiner oberen Position gegenüber den Führungsschienen (13 bzw. 14) zu verriegeln, und ferner Mittel aufweist, welche geeignet sind, weiter vorne mit zusätzlichen Mitteln (15b) eines vorderen Dachelements (1) zusammenzuwirken, um das genannte Dachelement (1) an dem Schlitten (8) zu verriegeln und den genannten Schlitten (8) gegenüber den Führungsschienen (13 bzw. 14) zu entriegeln.

11. Fahrzeugdach nach einem der vorstehenden Ansprüche, **dadurch gekennzeichnet, dass** es drei Dachelement (1, 2, 3) aufweist.

## Claims

1. Openable vehicle roof, which has a movable rear roof element (3) and at least one movable front roof element (1, 2), each roof element (1, 2, 3) being provided on both sides with a lateral guide (5, 6, 7) arranged longitudinally in the vicinity of the side edges and assigned to the roof elements (1, 2, 3), **characterized in that** each lateral guide (5, 6) of each front roof element (1, 2) is provided with a longitudinal ramp (5', 6'), in which there moves a projecting element (6a, 7a) which is fixed to the front end of the corresponding lateral guide (6, 7) of the roof element (2, 3) adjoining at the rear, so that the lateral longitudinal ramps (5', 6') and the elements (6a, 7a) engaging in these have the effect that, during the movement of the said front roof element (1, 2) towards the rear, the adjacent roof element (2, 3) is raised upwards in order to make it possible for the said front roof element (1, 2) to come to lie under the said adjacent roof element (2, 3) raised in this way.

2. Vehicle roof according to Claim 1, **characterized in that** the projecting element is formed by a finger (6a, 7a), and **in that** the rear section (5b, 6b) of each ramp (5', 6') has a section which extends obliquely upwards and forwards in such a way that, during the movement of the said front roof element (1, 2) towards the rear, the finger (6a, 7a) of the adjacent roof element (2, 3) to be raised engages in the said rear section (5b, 6b) of the said ramp (5', 6').

3. Openable vehicle roof according to Claim 1 or 2, which has a movable rear roof element (3) and at least one movable front roof element (1, 2) which, in the open position of the roof, can be stored in a rear stowage space, **characterized in that**, before being lowered into the stowage space, the front and rear roof elements (1, 2, 3) are collected in a position lying above one another by a holding part (8) formed as a carriage.

4. Vehicle roof according to Claim 3, **characterized in that** the holding part (8) can be moved along guide rails (14, 13) in order to be lowered.

5. Vehicle roof according to Claim 3 or 4, **characterized in that** the rear roof part (3) is mounted on the holding part (8) by means of at least one pivoting lever (rods 9 and 10).

6. Vehicle roof according to Claim 5, **characterized in that** each lateral guide (7) of the rear roof element (3) is mounted on a corresponding lateral carriage (8) via a rod (9), whose rear end (9a) is attached to a rear attachment point (8a) located in the rear end of the carriage (8), and whose front end (9b) is attached to a front attachment point (7c) placed at the front end of the said lateral guide (7).

7. Vehicle roof according to Claim 6, **characterized in that** a further rod (10) is mounted at its rear end (10a) such that it can rotate with respect to the rear end (7b) of the corresponding lateral guide (7) and in the vicinity of its front end (10c) after a hinge axis (10d) which, at (9d), crosses a central part of the rod (9).

8. Vehicle roof according to Claim 7, **characterized in that** a finger (11) carried by the front end (10c) of the rod (10) in front of the axis (10d) is inserted into an opening (8c) which is arranged on the carriage (8) and is formed in such a way that the rod (10) rotates in the opposite clockwise direction to that in which the rod (9) rotates with respect to the carriage (8).

9. Vehicle roof according to one of Claims 3 to 8, **characterized in that** at its front end each carriage (8) has a front guide finger (8e) which engages in a front guide rail (14), and at its rear end has a rear guide finger (8d) which is gripped in a rear guide rail (13), each front rail (14) and each rear rail (13) being fixed to the vehicle body and, starting from the upper end (14a, 13a), extending in a vertical plane which corresponds to the position of the corresponding finger of the carriage (8) in the upper position, in which the roof is in its closed position, as far as its lower end (14b, 13b), substantially at the level of the floor (16) of the vehicle, which corresponds to the position of the corresponding finger of the carriage (8) when the said carriage (8) comes to lie in its lower position substantially on the floor (16) and supports the various roof elements (1, 2, 3).

10. Vehicle roof according to one of Claims 3 to 9, **characterized in that** each carriage (8) has locking means (8b) in order to lock the said carriage (8) in its upper position with respect to the guide rails (13 and 14) and also has means which are suitable to interact further forward with additional means (15b) of a front roof element (1) in order to lock the said roof element (1) to the carriage (8) and to unlock the said carriage (8) with respect to the guide rails (13 and 14).

11. Vehicle roof according to one of the preceding claims, **characterized in that** it has three roof elements (1, 2, 3).

## Revendications

1. Toit ouvrant de véhicule, qui présente Lui élément de toit arrière mobile (3) et au moins un élément de toit avant mobile (1, 2), sachant que chaque élément de toit (1, 2, 3) est pourvu de part et d'autre d'un guide latéral (5, 6, 7) associé à l'élément de toit (1, 2, 3) en étant disposé longitudinalement près des bords latéraux, **caractérisé en ce que** chaque guide latéral (5, 6) de chaque élément de toit avant (1, 2) est pourvu d'une rampe longitudinale (5', 6') dans laquelle se déplace un élément en saillie (6a, 7a) qui est fixé à l'extrémité avant du guide latéral correspondant (6, 7) de l'élément de toit (2, 3) adjacent du côté arrière, de sorte que les rampes longitudinales latérales (5', 6') et les éléments (6a, 7a.) s'engageant dans ces rampes ont pour effet que, lors du déplacement vers l'arrière dudit élément de toit avant (1, 2), l'élément de toit adjacent (2, 3) est soulevé vers le haut, pour permettre audit élément de toit avant (1, 2) de venir se loger au-dessous dudit élément de toit adjacent (2, 3) ainsi soulevé.

2. Toit de véhicule selon la revendication 1, **caractérisé en ce que** l'élément en saillie est formé par un doigt (6a, 7a), et **en ce que** le tronçon arrière (5b, 6b) de chaque rampe (5', 6') est un tronçon qui s'étend en biais vers le haut et vers l'avant de telle sorte que, lors du déplacement vers l'arrière dudit élément de toit avant (1, 2), le doigt (6a, 7a) de l'élément de toit adjacent (2, 3) à soulever s'engage dans ledit tronçon arrière (5b, 6b) de ladite rampe (5', 6').

3. Toit ouvrant de véhicule selon la revendication 1 ou 2, qui présente un élément de toit arrière mobile (3) et au moins un élément de toit avant mobile (1, 2) qui, dans la position ouverte du toit, peuvent être stockés dans un compartiment de rangement arrière, **caractérisé en ce que** les éléments de toit avant et arrière (1, 2, 3) sont, avant d'être abaissés dans le compartiment de rangement, regroupés dans une position superposée par un élément récepteur (8) réalisé sous forme de chariot.

4. Toit de véhicule selon la revendication 3, **caractérisé en ce que** l'élément récepteur (8) peut, en vue de l'abaissement, être déplacé le long de rails de guidage (14, 13).

5. Toit de véhicule selon la revendication 3 ou 4, **caractérisé en ce que** l'élément de toit arrière (3) est monté sur l'élément récepteur (8) au moyen d'au moins un levier pivotant (biellettes 9, 10).

6. Toit de véhicule selon la revendication 5, **caractérisé en ce que** chaque guide latéral (7) de l'élément de toit arrière (3) est monté sur un chariot latéral correspondant (8) par l'intermédiaire d'une biellette (9) dont l'extrémité arrière (9a) est articulée en un point d'articulation arrière (8a) qui se trouve à l'extrémité arrière du chariot (8), et dont l'extrémité avant (9b) est articulée en un point d'articulation avant (7c) situé à l'extrémité avant dudit guide latéral (7).

7. Toit de véhicule selon la revendication 6, **caractérisé en ce qu'**une autre biellette (10) est montée pivotante à son extrémité arrière (10a) par rapport à l'extrémité arrière (7b) du guide latéral correspondant (7) et près de son extrémité avant (10c) suivant un axe d'articulation (10d) qui traverse en (9d) une partie médiane de la biellette (9).

8. Toit de véhicule selon la revendication 7, **caractérisé en ce qu'**un doigt (11) porté par l'extrémité avant (10c) de la biellette (10) en avant de l'axe (10d) est engagé dans une lumière (8c) qui est ménagée sur le chariot (8) et conformée de telle sorte due la biellette (10) pivote dans le sens opposé au sens dans lequel pivote la biellette (9) par rapport au chariot (8).

9. Toit de véhicule selon l'une des revendications 3 à 8, **caractérisé en ce que** chaque chariot (8) présente à son extrémité avant un doigt de guidage avant (8e), qui est engagé dans un rail de guidage avant (14), et à son extrémité arrière un doigt de guidage arrière (9d), qui est engagé dans un rail de guidage arrière (13), sachant que chacun des rails avant (14) et arrière (13) est solidaire de la carrosserie du véhicule et s'étendant dans un plan vertical depuis son extrémité supérieure (14a, 13a), qui correspond à la position du doigt correspondant du chariot (8) dans sa position haute dans laquelle le toit est dans sa position fermée, jusqu'à son extrémité inférieure (14h, 13b), sensiblement au niveau du plancher (16) du véhicule, ce qui correspond à la position du doigt correspondant du chariot (8) lorsque ledit chariot (8) dans sa position basse repose pour l'essentiel sur le plancher (16) et porte les divers éléments de toit (1, 2, 3).

10. Toit de véhicule selon l'une des revendications 3 à 9, **caractérisé en ce que** chaque chariot (8) présente des moyens de verrouillage (8b) pour verrouiller ledit chariot (8) dans sa position haute par rapport aux rails de guidage (13, 14), et en outre des moyens qui sont aptes à coopérer plus en avant avec des moyens supplémentaires (15b) d'un élément de toit avant (1) pour verrouiller ledit élément de toit (1) sur le chariot (8) et déverrouiller ledit chariot (8) par rapport aux rails de guidage (13, 14).

11. Toit de véhicule selon l'une des revendications précédentes, **caractérisé en ce qu'**il présente trois éléments de toit (1, 2, 3).
